# EUROPEAN PATENT APPLICATION

(11) **EP 4 545 267 A1**
(43) Date of publication of application: **30.04.2025**
(21) Application number: 23425060.3
(22) Date of filing: 24.10.2023
(51) Int. Cl.: B29C 33/36, B29C 39/06, B29C 39/24, B29D 35/12, B29C 31/00, B29C 31/04, B29C 41/02, B29C 41/36, B29C 44/04, B29K 21/00, B29K 75/00, B29L 31/50

(54) **SYSTEM FOR CASTING POLYURETHANE AND/OR ELASTOMERIC MATERIAL WITH THE AID OF TWO ROBOTS**

(71) Applicant: Giampaoli, Enrico, 62018 Potenza Picena (MC) (IT)
(72) Inventor: Giampaoli, Enrico, 62018 Potenza Picena (MC) (IT)

(57) **Abstract**

The present utility model "System for casting polyurethane and/or elastomeric material with the aid of two robots", refers to a system for the manufacture of footwear soles by casting polyurethane and/or elastomeric material inside a lower mould (13) provided with a cavity (14) by means of a rotary table (1) equipped with a first robot (4) for moving the lower mould (13) and a second robot (5) for casting.

Following movement of the rotary table (1), the first robot (4) picks up the lower mould (13) at the station (3) to place it at the casting station. At the same time, the second robot (5) is positioned so that the casting nozzle is located at the cavity (14) of the support (12) of the lower mould (13), as programmed.

The simultaneous movement of the two robots allows, compared to the solutions at the time when the nozzle approaches the stationary mould, the reduction of the time to reach the casting position.

During casting, depending on the desired quality of the final product and the characteristics of the material used, it is possible that:
- The first robot (4) keeps the lower mould (13) stationary
- The first robot (4) moves the lower mould (13) in order to allow the material a better distribution inside the cavity (14)
- The second robot (5) keeps the casting nozzle (18) still
- The second robot (5) moves the casting nozzle (18) over the cavity (14) in order to better distribute the material being cast.

At the end of the casting phase, which generally lasts 1-3 seconds, the first robot (4) for holding the lower mould (13) continues its movement until the end of the first solidification phase.

This phase may have different variable times depending on the amount of material used.

The movements that can be made by both the lower mould (13) and the pouring nozzle (18) occur from the combination of:
- Movement in space (42) along the three axes (X, Y and Z), i.e. in the plane and in height
- Rotation (43) with respect to axis (X)
- Rotation (44) with respect to axis (Y)
- Rotation (45) with respect to axis (Z)

The possibility of making any desired movement allows the present solution to reduce the time for the distribution of the material inside the lower mould (13), as the material is still very liquid, with improved performance in terms of quality.

At the end of the movement phase of the lower mould (13), the first robot (4) reposition the support (12) on the rotary table (1).

At this point, the rotary table (1) can move one step.

## Description

### Utility model scope

The "System for casting polyurethane and/or elastomeric material with the aid of two robots" allows the creation of machines for casting polyurethane and/or elastomeric material in which the operation is carried out with the aid of two robots, improving the quality of the product.

Reference is made herein to the production of soles for footwear, but the solution can be applied in all those applications with casting moulding of polyurethane, elastomeric material and the like.

The present solution arises from the market's need to have products characterised by higher quality, free of the defects that occur in the cooling phase of the material cast inside the moulds that are with traditional production techniques.

The system includes a pair of robots associated with the rotary table (1) (multi-stage machine positioned linearly or arranged in an arc or circle). The first robot (4) picks up the lower mould (13) and positions it at the casting position.

At the same time, the second robot (5) on which the casting nozzle (18) is present, positions it at the casting position (at the cavity (14) of the lower mould (13)).

The first robot (4) performs the oscillations of the mould to better uniform the polyurethane and/or elastomeric material in the liquid state inside the lower mould (13). The movement of the lower mould continues for a few seconds after the end of the casting, in order to allow the material the correct distribution before it solidifies.

At the end of the phase, the robot (4) positions the lower mould in the position (3) of the rotary table (1).

The first robot (4) and the second robot (5) are independent of each other and from the rotary table (1).

The system can be applied to types of moulding machines characterised by any number of machining stations and whether linear or not.

### Prior technique

Static machines comprising a mould or rotary machines having a plurality of stamps arranged on rotary tables called turret or conveyor are used for the production of soles for footwear, technical articles, etc.

In the rotary tables (1) the moulds for making the soles, advance in different positions (2) among which the mould preparation station, a casting station (3), a mould closing station, a station for extracting the moulded product are identified.

The lower mould (13) has a cavity (14) characterised by the shape of the sole to be obtained.

At the casting station (3), the polyurethane in liquid form is introduced into the mould cavity which, following solidification, will form the sole.

The rotary table (or turret, or conveyor) is characterised by the rotation of the moulds. As a result, each mould is soon periodically located at the casting station. At this station, there is the casting nozzle which, by positioning itself above the mould, casts the polyurethane and/or elastomeric material into the mould cavity in compliance with the parameters (e.g. temperature, quantity) defined in the work programming phase.

At the end of casting, the machine moves the mould by one position, and the mould is closed by means of the specific upper mould (15).

The creation of soles according to this technique presents some problems due to:
- The material introduced into the cavity is liquid and tends to distribute itself within the cavity in a homogeneous manner. During the distribution phase, solidification begins: the material becomes denser and slower to distribute and air bubbles may remain inside the mould, resulting in a defect in the product.
- To improve the quality of the product, there is a tendency to enter a larger quantity of product which is then closed by the upper mould. Pressure helps in the reduction of defects, even if it does not eliminate them completely, but involves the creation of heavier and more expensive products.

The search for solutions to improve performance, particularly in terms of product quality, has led to the adoption of improvements and the creation of more advanced machines.

Some solutions provide for the casting of a greater quantity of polyurethane and/or elastomeric material, which is closed at the top by means of a second mould, before cooling. The product obtained, although it has fewer visual defects, is characterised by a greater weight and production cost (due to the greater amount of material used).

Some solutions on the market are characterised by the presence of a casting nozzle that moves, thanks to an anthropomorphic robot, above the cavity.

After the machine has positioned the mould at the casting station, the pouring nozzle moves according to the shape of the mould cavity, carrying out the casting and allowing a better distribution of the material.

Other solutions are characterised by the presence of mould supports that move while remaining constrained to small movements with respect to the reference plane of the rotary table.

Some solutions relating to machines for making expanded polyurethane products are the subject of previous patents such as:
- Patent "Methods for producing sporting goods and sporting good" application no. EP 3 326 774 A1, relating to the production system of a part of a sports shoe by casting the product inside a mould which is subsequently vibrated for the best distribution of the material in the mould itself.
- DE 20 2014 106 196 U1, relating to a system for the production of a component consisting of a printed leather placed on a support and a layer of foam interposed between the printed leather and the support
- Patent "Equipment and method for the production of expanded polyurethane products" application no. 102018000010344, relating to a casting system in which the mould holder of the casting position is oscillating. The mould oscillations are carried out both around the X axis and around the Y axis.
- Patent "Method and installation for producing rotomoulded products" application no. US 2019/0275708, relating to the moulding system by casting material inside moulds arranged on a rotating system
- Patent "A system for moulding soles onto shoes legs" application no. EP 0 181533 A2, relating to a system for printing the soles of footwear by means of a rotatable moulding table with positions for a plurality of shapes
- Patent "Apparatus and method for reshaping plastic preforms into plastic containers with an automatic changing device for handling parts" application no. US 2015/0251366 A1, relating to a system for moulding plastic material with an automatic change system for the handling of parts
- Patent No. DE 10 2005 014 942 A1, relating to a material processing system for processing plastic on moulds by means of a turret and a robot
- Patent "Equipment for the injection manufacturing of a two-colour and/or density plastic product, in particular a sole for footwear, and related method of manufacture" application no. 102014902235591A1, relating to a printing turret characterised by the application of two different materials (for colour or density)
- Patent "Method of forming an expanded plastic product into a mould" application no. 102018000004628, relating to the forming of an expanded plastic product which is introduced into the cavity of a mould, with the wetting phase of a part of the internal surface of the mould
- Patent "Moulding Press" application no. 102018000004652, relating to a moulding press in which the mould holder is translatable and along the X axis and rotatable around the Y axis
- Patent "Orbital mould Holder" application no. 102018000005664, relating to a mould holder for the production of polyurethane materials in which the mould holder can rotate around the Y axis and around the X axis.

These patents relate to the different ways of making the casting machine by means of a rotary table (turret or conveyor) as for patents no. DE 20 2014 106 196 U1, US 2019/0275708, EP 0 181533 A2, US 2015/0251366 A1, DE 10 2005 014 942 A1 and no. 102014902235591A1.

Patent no. 102018000004628 relates to the realisation of the casting of plastic material by means of a wetting phase.

Other patents are related to the realisation of mould holders, installed on board the moulding machine (turret) that perform vibrating, translating or rotating movements along the X and Y axes as for patents no. EP 3 326 774 A1, no. 102018000010344, no. 102018000004652 and no. 102018000005664. These movements are in any case carried out by means of movement systems installed on board the rotary table and which allow the movement of the mould holder only.

Patents and other solutions on the market in which the mould holder can move or rotate have the common purpose of improving the performance of the final product, having a higher level of quality, with reduction of visual defects.

The market asks producers to further increase the quality of products which must be, at the same time, light, cheap and in any case free of imperfections.

The fund production sector therefore requires solutions that are at the same time:
- Economic to implement,
- Applicable on rotary turrets without changing the structure of the same,
- That does not slow down production times
- That uses the least amount of material possible

The solution covered by this patent makes it possible to obtain even better performance, with optimisation of the material used and without requiring increases in production times.

This solution differs from traditional plastic casting techniques in that the phase is carried out with the aid of two anthropomorphic robots.

The first robot (4) is used to pick up the mould from the workstation and to position it at the casting station.

At the same time, the second robot (5) on which the casting nozzle (18) is installed is also moved, positioning it at the casting start position.

During the casting phase, the two robots can carry out:
- The first robot (4) moves the lower mould (13)
- The second robot (5) handles the pouring nozzle (18).

The combination of the movements of the two robots allows the application of the material inside the mould, optimising its distribution according to the shape of the mould, the type of material cast, solidification times and other processing parameters.

At the end of the casting phase, the first robot (4) that supports the lower mould (13) continues with the movement of the mould, which is kept open. The movement of the mould favors the distribution of the material inside the mould and at the same time, since the chemical reaction of the material takes place without the compression of the upper mould (15), there are lighter products compared to the known technique in which the mould closes immediately after casting.

### Summary description of the utility model

The utility model in question is characterised by:
- Multi-seat rotary table (1) (or carousel);
- First Cartesian robot (4) for the gripping and handling of the mould;
- Second Cartesian casting robot (5).

### Brief description of the drawings

The figures that are used to illustrate this patent for the utility model are:

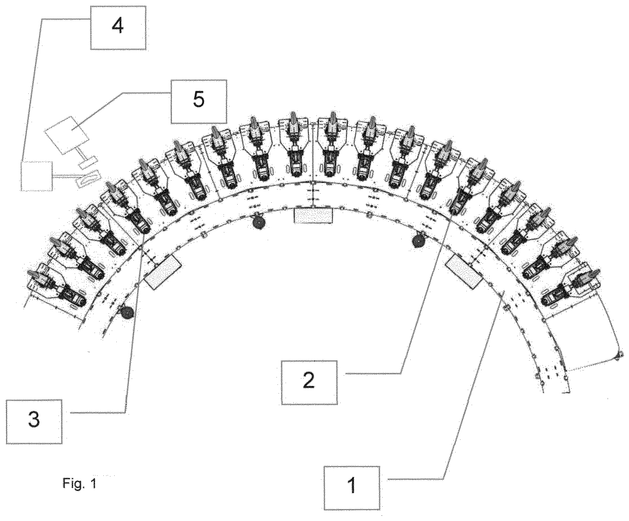

Fig. 1: identification of the main parts that make up the system.

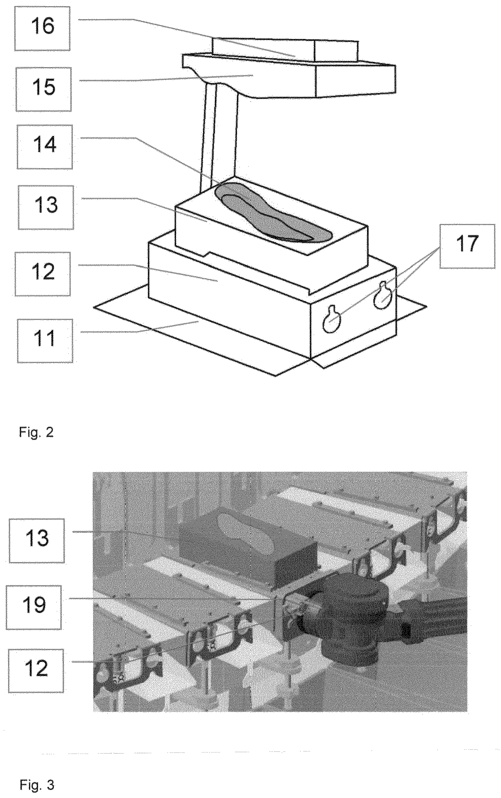

Fig. 2: description of the components present at each rotary table station (1).
Fig. 3: picking phase of the lower mould (13) by the first robot (4).

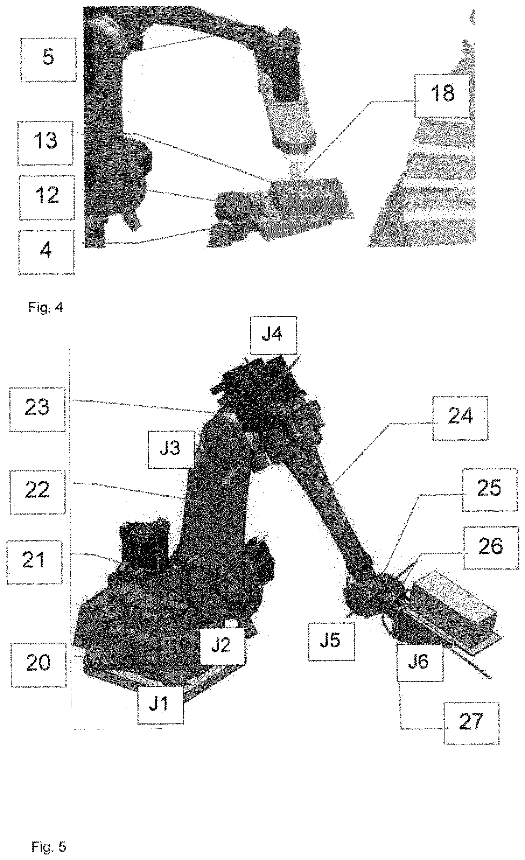

Fig. 4: position of the lower mould (13) and the casting nozzle (18) during the casting start phase.
Fig. 5: example of the first robot (4) for gripping the support (12) of the lower mould (13).

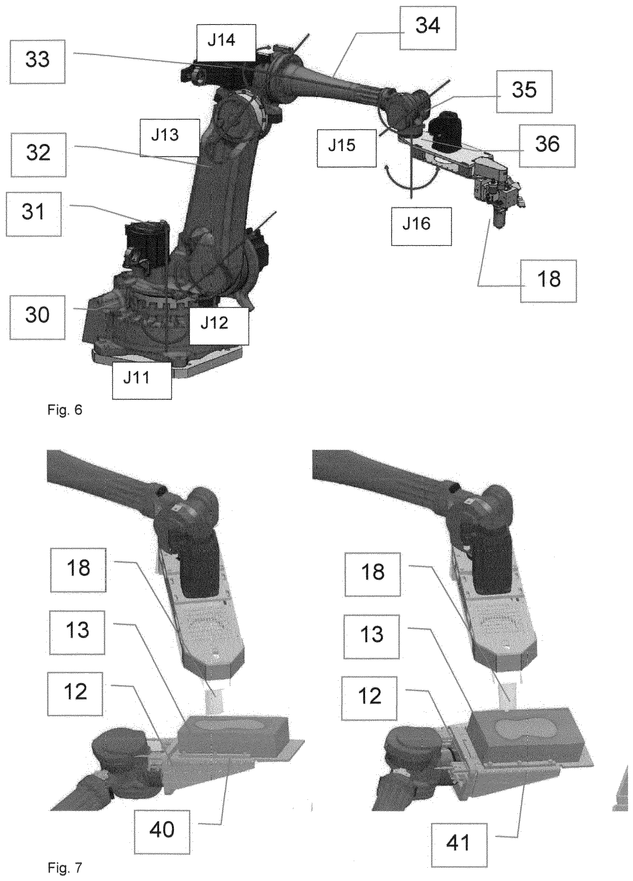

Fig. 6: example of the second robot (5) equipped with a pouring nozzle (18).
Fig. 7: example of movements of the first robot (4) and the second robot 85) during the casting phase.

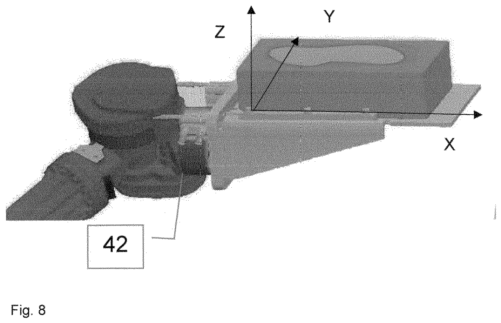

Fig. 8: examples of movements of the mould holder (13) during the first cooling phase of the material.

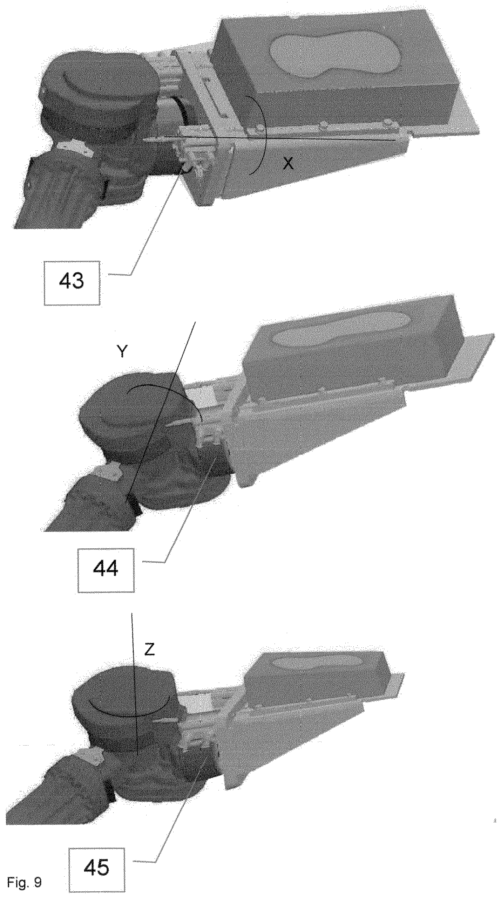

Fig. 9: examples of rotations of the mould holder (13) during the first cooling phase of the material.

### Detailed description of the solution

This utility model relates to a casting system of polyurethane and/or elastomeric material or similar, using two robots.

This system applies to a rotary table (turret) or conveyor (1).

On the rotary table there are several stations (2) for holding the moulds. Each position is characterised by a different work phase including: casting station, mould closing station, product removal station.

This solution requires that two robots are present at the casting station (3): the first robot (4) for moving the mould and the second robot (5) that performs the casting operation.

Each station (2) of the rotary table (1) is characterised by the presence of a support area (11), support (12) for the sealing of the lower mould, lower mould (13), which has the cavity (14) into which the polyurethane and/or elastomeric material in the liquid state must be placed, an upper mould (15) which is kept raised by the sealing systems (16).

Each lower mould support has slots (17) or other system to allow gripping by robot.

The rotary table (1) is driven by movement systems which allow the individual stations (2) to be moved by successive steps through the different machining stations. After each step, the machine stops for the time necessary to allow the processing to be carried out in all the stations. At each station (2), the lower mould (13) is fixed to the support surface (11) by means of supports (12) that allow its removal by means of the specific grippers (19) of the first robot (4).

The first robot (4) has grippers (19) for the mould on which the casting is to be carried out.

Following movement of the rotary table (1), the first robot (4) picks up the lower mould (13) at the station (3) to place it at the casting point.

At the same time, the second robot (5) is positioned so that the pouring nozzle (18) is located at the cavity (14) of the lower mould (13), as programmed.

The simultaneous movement of the two robots allows, compared to the solutions known at the time when the nozzle approaches the mould, the reduction of the time to reach the position from which to start casting. Both robots (4 and 5) are independent of the rotary table, but positioned at the casting station (3).

The first robot (4) for gripping the lower mould (13) includes:
- A fixed base (20)
- A first arm (21) rotating with respect to the fixed base (20) to rotate around a first axis (J1)
- A second arm (22) mounted, rotating with respect to the first arm (21) to rotate around a second axis (J2) horizontal and orthogonal to the first axis (J1)
- A third arm (23) mounted, rotating with respect to the second arm (22) to rotate about a third axis (J3) horizontal and parallel to the axis (J2)
- A fourth arm (24) mounted, rotating with respect to the third arm (23) to rotate about the fourth axis (J4) orthogonal to the third axis (J3)
- A fifth arm (25) mounted, rotating with respect to the fourth arm (24) to rotate about the fifth axis (J5) orthogonal to the fourth axis (J4)
- A sixth axis (26) mounted, rotating with respect to the fifth arm (25) to rotate about the sixth axis (J6) orthogonal to the fifth axis (J5)
- Grippers (27) for gripping the support (12) for holding the lower mould.
Similarly, the second casting robot (5) comprises:
- A fixed base (30)
- A first arm (31) rotatable with respect to the fixed base (30) to rotate around a first axis (J11)
- A second arm (32) mounted, rotating with respect to the first arm (31) to rotate around a second axis (J12) horizontal and orthogonal to the first axis (J11)
- A third arm (33) mounted, rotating with respect to the second arm (32) to rotate about a third axis (J13) horizontal and parallel to the axis (J12)
- A fourth arm (34) mounted, rotating with respect to the third arm (33) to rotate about the fourth axis (J14) orthogonal to the third axis (J13)
- A fifth arm (35) mounted, rotating with respect to the fourth arm (34) to rotate about the fifth axis (J15) orthogonal to the fourth axis (J14)
- A sixth axis (36) mounted, rotating with respect to the fifth arm (35) to rotate about the sixth axis (J16) orthogonal to the fifth axis (J15)
- Casting nozzle (18).
During casting, depending on the desired quality of the final product and the characteristics of the material used, it is possible that:
- The first robot (4) keeps the lower mould (13) stationary
- The first robot (4) moves the lower mould (13) in order to allow the material a better distribution inside the cavity (14)
- The second robot (5) keeps the casting nozzle (18) still
- The second robot (5) moves the casting nozzle (18) over the cavity (14) in order to better distribute the material being cast.

The movement of the second robot (5) used for casting, in fact, allows the movement of the casting nozzle (18) above the cavity (14) of the lower mould (13) in order to improve the distribution of the material inside the cavity (14), depending on the product to be made.

The movement of the first robot (4) used to hold the support (12) of the lower mould (13) allows the mould to be translated, tilted, rotated and/or subjected to orbital movements in several directions, with better distribution of the material inside the cavity. Compared to known techniques, the movements of the single lower mould (13) are greater, without constraints linked to the presence of the rotary table.

The movements of the first robot (4) and the second robot (5) are a function of the article being processed and can be carried out on the basis of instructions received by means of robot learning techniques of different types:
- Programming
- Following the self-learning phase of the robot according to the movements carried out by expert personnel.

To obtain better quality products, the movement of the first robot (4) and the second robot (5) begins during the casting phase.

The casting of the material begins when the casting nozzle (18) is located above the cavity (14) of the lower mould (13). This position can be set as the starting position.

During the casting phase, the first robot (4) can move the lower mould (13) and the second robot (5) can move the casting nozzle (18) in any position, so that the polyurethane and/or elastomeric material cast by the nozzle (18) is evenly distributed in the cavity (14) of the lower mould (13).

During the casting step, for example, the lower mould (13) may be orthogonal (40) with the mould nozzle (18) or may be inclined (41).

The handling operations of the lower mould (13) thanks to the first robot (4) and the pouring nozzle (18) thanks to the second robot (5) allow the material to be distributed already in the liquid state during the casting phase. This allows the material to be distributed evenly over the entire surface of the mould, eliminating any defects caused by the presence of air bubbles that cannot escape when the material has already begun the solidification process.

At the end of the casting phase, which generally lasts 1-3 seconds, the first robot (4) for holding the lower mould (13) continues its movement until the end of the solidification phase.

This phase can have different times depending on the amount of material used (approximately 8 seconds).

The movements that can be carried out by the lower mould (13) are given by the combination:
- Movement in space (42) along the three axes (X, Y and Z), i.e. in the plane and in height
- Rotation (43) with respect to axis (X)
- Rotation (44) with respect to axis (Y)
- Rotation (45) with respect to axis (Z)

The possibility of making any desired movement allows the present solution to reduce the time for the distribution of the material inside the lower mould (13), as the material is still very liquid, with improved performance in terms of quality.

At the end of the movement phase of the lower mould (13), the first robot (4) reposition the support (12) on the rotary table (1).

The time that elapses between when the first robot (4) picks up the lower mould (13) and how much it repositions it on board the rotary table (1) are variable depending on the product to be made, quantities of material used and approximately between 8-10 seconds (time similar to the length of time the mould stays at the casting station in traditional rotary tables).

The motor of the rotary table (1) is controlled so that during the entire casting and movement phase of the lower mould, the rotation is blocked.

The rotary table (1) carries out the movement of a station, after the first robot (4) has repositioned the full lower mould (13).

The lower mould (13) on which the casting phase has just been completed, is placed in the next work station where the upper mould (15) will be closed.

The time required for the first robot (4) to move the lower mould (13) allows the material a first phase of solidification in air, obtaining a product characterised by the absence of imperfections and at the same time lighter.

The system can be applied for casting polyurethane and/or elastomeric material, regardless of the number of stations present on the rotary table, regardless of the shape of the lower moulds (13) and shape of the cavity (14), of the materials used.

Depending on the type of cavity (14) and therefore the product to be made, the movements and movement times of both the first robot (4) and the second robot (5) will be programmed or self-learned.

The combined movement of the casting nozzle (18) and the lower mould (13) allows the best distribution of the polyurethane and/or elastomeric material inside the mould when it is still in the liquid state.

The movement of the lower mould (13) in the seconds following casting, allows further improvement of the performance of the product, as the material continues to be distributed in the mould during the first solidification phase and the chemical reaction takes place with the mould open.

The presence of the first robot (4) and the second robot (5) allow the lower mould (13) and the casting nozzle (18) to be moved simultaneously, with optimisation of the time for reaching the casting start position, compared to the traditional methods in which it is the casting nozzle (18) that is brought to correspond to the cavity (14) with consequent saving of time in the production of the final product.

The presence of the first robot (4) and the second robot (5) independent of each other and from the rotary table (1), allows the programming of the movements of each according to the level of quality required, shape of the product to be made, quantities of material needed.

During the production phase, depending on the known techniques for recognising the article for the individual mould, the production management software will associate the movements that must be carried out by the individual robot to the article that is being processed.

The flexibility of the present application to the different types of products and the higher quality of the product are due to the use of independent robots for separate movement, but at the same time combined with the lower mould (13) and casting nozzle (18).

## Claims

1. The "System for casting polyurethane and / or elastomeric material with the aid of two robots" consisting of
- a rotary table (1), in which, for each station, there is a support (12) for holding the lower mold (13) which has the cavity (14) in which the polyurethane and / or elastomeric material must be introduced , an upper mold (15) held by a support (16)
- a first robot (4) which picks up the lower mold (13) and a second robot (5) equipped with a casting nozzle (18) which move in space by positioning the casting nozzle (18) in correspondence cavity (14)
during the casting phase, depending on the product to be made, the first robot (4) moves the lower mold (13) under the casting nozzle (18) which in turn can be stationary or move at best distribution of the material, at the end of the casting phase the first robot (4) continues to move the lower mold (13) allowing the distribution of the material inside the cavity (14) and at the end of the operation, the first robot (4) places the lower mold (13) on the rotating table (1).

2. The system according to claim 1 in which the presence of the first robot (4) and of the second robot (5) allow to move the lower mold (13) and the casting nozzle (18) at the same time, with optimization of the times for the reaching the casting position

3. The system according to claim 1 in which the first robot (4) moves the lower mold (13) in correspondence with the casting nozzle (18) and at the same time the casting nozzle is moved by the second robot ( 5), according to relative movements programmed or acquired in self-learning so as to allow the best distribution of the liquid polyurethane and / or elastomeric material inside the cavity (14) of the lower mold (13).

4. The system according to claim 1 in which following the conclusion of the casting phase, the lower mold (13) is moved by the first robot (4) according to programmed or self-learning movements so as to allow the best distribution of the polyurethane and / or elastomeric material inside the cavity (14) of the lower mold (13) before solidification.

5. The system according to claim 1 wherein the first robot (4) allows the movement of the lower mold (13) by means of translation, rotation and inclination and orbital movements, by means of a combination of movement and rotation along the three axes.

6. The system according to claim 1 wherein the second robot (5) allows the movement of the casting nozzle (18) by means of translation, rotation and inclination and orbital movements, by means of a combination of movement and rotation along the three axes , for the best distribution of the polyurethane and / or elastomeric material in the liquid state.

7. The system according to claim 1 wherein the rotary table (1) is equipped with movement systems programmed in such a way that the rotary table (1) moves one station, it blocks when the lower mold (13) is at the pick-up station by the first robot (4), it remains stationary waiting for the casting phase to take place, rotates one position immediately after the first robot (4) has positioned the lower mold (13) wherein the cavity (14) has been filled with polyurethane and / or elastomeric material.

8. The system according to claim 1 wherein the first robot (4) is separated from the rotary table (1) and from the second robot (5) resulting in greater freedom of movement of the lower mold (13) in the space.

9. The system according to claim 1 in which the second robot (5) is separated from the rotating table (1) and from the second robot (1) resulting in greater freedom of movement of casting nozzle (18) in the space.
